# EUROPEAN PATENT APPLICATION

(11) **EP 2 902 620 A1**
(43) Date of publication of application: **05.08.2015**
(21) Application number: 14153286.1
(22) Date of filing: 30.01.2014
(51) Int. Cl.: F03D 1/06

(54) **Wind turbine blade with three parts each comprising a different material and method for manufacturing the same**

(71) Applicant: Siemens Aktiengesellschaft, 80333 München (DE)
(72) Inventor: Grove-Nielsen, Erik, 7870 Roslev (DK)

(57) **Abstract**

It is described a rotor blade (160) for a wind turbine (100), which comprises (a) a root part (162) which is configured for being mounted to a hub (112) of the wind turbine (100), (b) a center part (164) which is mechanically connected to the root part (162), and (c) a tip part (166) which is mechanically connected to the center part (164). The root part (162) comprises a first material, the center part (164) comprises a second material being different from the first material, and the tip part (166) comprises a third material being different from the first material and from the second material. It is further described a wind turbine (100) with a rotor (110) comprising at least one such segmented rotor blade (160) and a method for manufacturing such a segmented rotor blade (160).

## Description

### Field of invention

The present invention relates to a blade for a rotor of a wind turbine. Further, the present invention relates to a wind turbine with a rotor comprising at least one such rotor blade and to a method for manufacturing such a rotor blade.

### Art Background

In order to improve the mechanical energy extraction from wind driving the rotor blades of a wind turbine modern rotor blades have a length of up to 50 meters or even more. Such a large blade extension yields the problem, that there are high mechanical stresses due to the resulting heavy weight of the respective rotor blade. This holds in particular when the wind turbine is operated in strong wind conditions. Further, the rotor blade must not be so flexible (i.e. must exhibit a high stiffness) in order to avoid a collision between a tip part of the rotor blade and the tower when the respective rotor blade is in its lowest rotational position even when a strong wind tries to bend the rotor blade backwards.

There may be a need for improving the construction of a rotor blade of a wind turbine in such a manner that the given mechanical requirements can be fulfilled in an optimized way.

### Summary of the Invention

This need may be met by the subject matter according to the independent claims. Advantageous embodiments of the present invention are described by the dependent claims.

According to a first aspect of the invention there is provided a rotor blade for a wind turbine. The provided rotor blade comprises (a) a root part which is configured for being mounted to a hub of the wind turbine, (b) a center part which is mechanically connected to the root part, and (c) a tip part which is mechanically connected to the center part. The root part comprises a first material, the center part comprises a second material being different from the first material, and - the tip part comprises a third material being different from the first material and from the second material.

The described rotor blade is based on the idea that different sections of a wind turbine rotor blade are subjected to different levels of mechanical stress and must fulfill different mechanical requirements in order to allow for a reliable and long lasting operation of a wind turbine without the need for replacing the rotor blades frequently. In particular, the root part must be so stable in order to sustain e.g. strong bending forces which result from the rotor load on the individual rotor blade caused by the pressure of the wind driving the wind turbine.

Further, the tip part should be made of a comparatively light material in order to reduce gravitational forces. Thereby, it has to be taken into account that due to the radial separation of the tip part from the rotational axis the centrifugal force acting on the tip part will be comparatively large. Further, the tip part should exhibit a high stiffness in order to avoid that the wind acting on the tip part causes a strong bending of the tip part which could result into a mechanic collision between the tip part and the tower when the respective rotor blade is in its lowest rotational position.

The same considerations which have been elucidated above with respect to the tip part also apply in a diminished manner to the center part.

The root part may comprise a transition zone from a circular shape at the root end to an air foil shape at the outer end being adjacent to the center part. The center part may exhibit a continuous airfoil shape with a moderate twist of the main form. The tip part may be characterized in particular by a low weight and a high stiffness.

By choosing appropriate materials for the three different blade parts the wind turbine blade can be designed, constructed and build up in a proper way such that all special mechanical requirements which are different for the various blade parts can be fulfilled in an optimized manner.

It is mentioned that in this document the term "comprising" may mean "made from" or "consisting of". Thereby, the term "made from" or "consisting of" may mean that the main material the respected blade part is made from takes more than 80 vol% and preferably more than 90 vol% and more preferably more than 95% of the total volume of the respective part of the rotor blade.

It is further mentioned that in accordance with the usual geometric design of a wind turbine rotor blade the three parts are arranged with respect to each other along a longitudinal main direction of the rotor blade, which direction corresponds to the radial direction of a rotor which comprises at least one of such rotor blades.

According to an embodiment of the invention the rotor blade further comprises (a) a first interface which is arranged between the root part and the center part and which mechanically connects the root part and the center part and (b) a second interface which is arranged between the center part and the tip part and which mechanically connects the center part and the tip part.

The described interface may comprise any suitable connection means which is capable of mechanically connecting the respective blade parts with each other. The connection means may comprise e.g. glue, bolts, screws, anchors, rivets, etc. In case the connection means comprises a glue at least two of the three blade parts may be connected together in a shear force transmission envelope, i.e. layers of laminate are glued onto both sides of the joining blade skin laminates.

The connection means may connect the respective blade parts in a permanent or in a non-reversible manner. This may provide the advantage that the mechanical connection can be realized in a simple manner and can exhibit a high durability. Connecting the different wind turbine blade parts with each other may be preferably carried out at the site where the corresponding wind turbine is erected. This means that the three blade parts can be transported separately or side by side to the wind turbine erection site. Further, the different blade parts may be manufactured at different factories. This may be in particular beneficial if the production of the different blade parts relies on different production techniques. For example, the high stiffness tip part could be manufactured in an aerospace quality production environment, whereas the central part and/or the tip part could be manufactured in a robotized fiberglass production facility.

Alternatively, the connection means may connect the respective blade parts in a detachable or reversible manner. Apart from the above elucidated advantages of a simplified transportation and the possibility to produce the blade parts at different (specialized) factories a detachable mechanical connection between the different blade parts may provide the advantage that in case of a damage of only one part of the wind turbine blade exclusively this part can be replaced. This may contribute to a significant reduction of the maintenance and/or repair costs for a wind turbine blade.

Due to the reduced lengths of the individual parts of the rotor blade as compared to the entire length of the rotor blade the transportation issues become of minor importance. E.g. for a road transportation of segmented very big blades, it may no more be necessary to stop other traffic some areas.

According to a further embodiment of the invention the rotor blade further comprises a fastening means, which is arranged at an end face of the root part which end face is located opposite to the center part, wherein the fastening means is configured for connecting the root part to the hub.

Also by means of the fastening means a permanent or a detachable connection may be realized. The fastening means may be realized in the same or in a similar manner as the first interface and/or the second interface as described above.

According to a further embodiment of the invention the root part has a length which is between 15% and 40%, preferably between 20% and 30% and more preferably between 21% and 25% of the total length of the entire rotor blade. In a preferred embodiment the length of the root part is at least approximately 23% of the total length of the entire blade.

According to a further embodiment of the invention the first material comprises a pre-stressed cement material. A steel, in particular a welded steel may be used as an envelope when casting the blade part. Preferably, the casting material inside the envelope could be a high strength "densit" cement such as "DucoritTM" or other cement material.

According to a further embodiment of the invention the center part has a length which is between 30% and 60%, preferably between 40% and 50% and more preferably between 43% and 48% of the total length of the entire rotor blade. In a preferred embodiment the length of the center part is at least approximately 46% of the total length of the entire blade.

According to a further embodiment of the invention the second material comprises at least one of the following materials: Glass fiber reinforced epoxy, glass fiber reinforced polyester, glass fiber reinforced polyurethane or other reinforced plastic material.

Generally speaking, for the center part of the described rotor blade it may be practical to use relatively cheap and non-exotic reinforcement materials such as a standard E-glass fiber.

The second material may be in particular a glass fiber reinforced epoxy plastic or carbon fiber reinforced epoxy plastic. The center part may be produced by means of the known Vacuum Assisted Resin Transfer Molding (VARTM) technique. Thereby, a number of e.g. glass fabrics are placed as a dry laminate stack in a mold. The mold is closed and evacuated to low pressure by means of a vacuum pump. Thereafter a liquid resin is infused into the dry laminate stack in the mold cavity and left to cure. After cure, the item such as a wind turbine blade can be taken out of the mold and can be finished.

For prior art blades being formed as a single piece and having a length of exceeding 50 m increasing problems are faced with controlling the flow pattern of the resin injected into the dry laminate stack. The lack of correct infusion, leaving dry spots in the blade can initiate severe blade failures. Extensive repair of badly infused areas are common and costly. By contrast thereto, for the rotor blade described in this document, injection failures will be strongly reduced. Therefore, costly repairs, grinding away of bad laminate and hand laminating repair laminate in a failure area will typically no more be necessary.

According to a further embodiment of the invention the second material is a reinforced material which exhibits a modulus of elasticity of between 50 GPa and 130 GPa, preferably between 70 GPa and 110 GPa and more preferably between 74 GPa and 82 GPa. In a preferred embodiment the modulus of elasticity of the second material is at least approximately 78 GPa, as for the center part the demand on stiffness per mass unit is not so big.

According to a further embodiment of the invention the tip part has a length which is between 20% and 45%, preferably between 25% and 40% and more preferably between 29% and 33% of the total length of the entire rotor blade. In a preferred embodiment the length of the tip part is at least approximately 31% of the total length of the entire blade.

According to a further embodiment of the invention the third material is a reinforced material which exhibits a modulus of elasticity of at least 150 GPa, preferably of at least 200 GPa and more preferably of at least 240 GPa.

The third material may be an exotic high strength material such as carbon fiber reinforced epoxy, carbon fiber reinforced polyester or carbon fiber reinforced polyurethane. The main reason for the need for high stiffness is that the typically very thin airfoil at the tip end must be kept free of the tower. Another reason is that it is desirable to have a low weight of the outer blade part in order to reduce the edgewise gravitational blade loads.

According to a further embodiment of the invention the center part comprises a first center sub-part and a second center sub-part which is mechanically connected to the first center sub-part, wherein the first center part comprises a different material than the second center part. Specifically, according to this embodiment the rotor blade is made from at least four different part which, in accordance with an embodiment having only three different blade parts, can be designed and constructed individually in an optimized manner in order to account for the different mechanical requirements (e.g. modulus of elasticity) which are given for different sections of the wind turbine blade.

It is explicitly mentioned that the number of separate blade parts which are connected together can also be larger than four. There is no principal limit regarding the maximum number of blade parts respectively blade sub-parts.

According to a further aspect of the invention there is provided a wind turbine for generating electrical power. The provided wind turbine comprises (a) a tower, (b) a nacelle which is arranged at a top end of the tower, and (c) a rotor which is arranged at a front end of the nacelle and which comprises at least one blade as described above.

According to a further aspect of the invention there is provided a method for manufacturing a rotor blade for a rotor of a wind turbine, in particular a rotor blade as described above. The provided method comprises (a) providing a root part of the rotor blade, which root part is configured for being mounted to a hub of the wind turbine and which root part comprises a first material, (b) providing a center part of the rotor blade, wherein the center part comprises a second material being different from the first material, (c) providing a tip part of the rotor blade, wherein the tip part comprises a third material being different from the first material and from the second material, (d) connecting the tip part to the center part, and (e) connecting the center part to the root part.

The described method is based on the idea that by forming different blade parts from different materials the mechanical properties of each blade part can be adapted in an optimized manner to the respective requirements for mechanical behavior of the respective blade part. As a consequence, a reliable and long lasting operation of a wind turbine can be achieved without the having the need for replacing the rotor blades frequently.

It is mentioned that the sequence of the steps given in the described manufacturing method is not limited to the given order. In particular, it may also be possible to connect first the center part to the root part and then to connect the tip part to the center part.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a wind turbine according to an embodiment of the present invention.
- Figure 2: shows a plan view of a rotor blade of the wind turbine shown in Figure 1.
- Figure 3a: shows the bending behavior of a prior art rotor blade of a wind turbine.
- Figure 3b: shows the bending behavior of a rotor blade in accordance with an embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

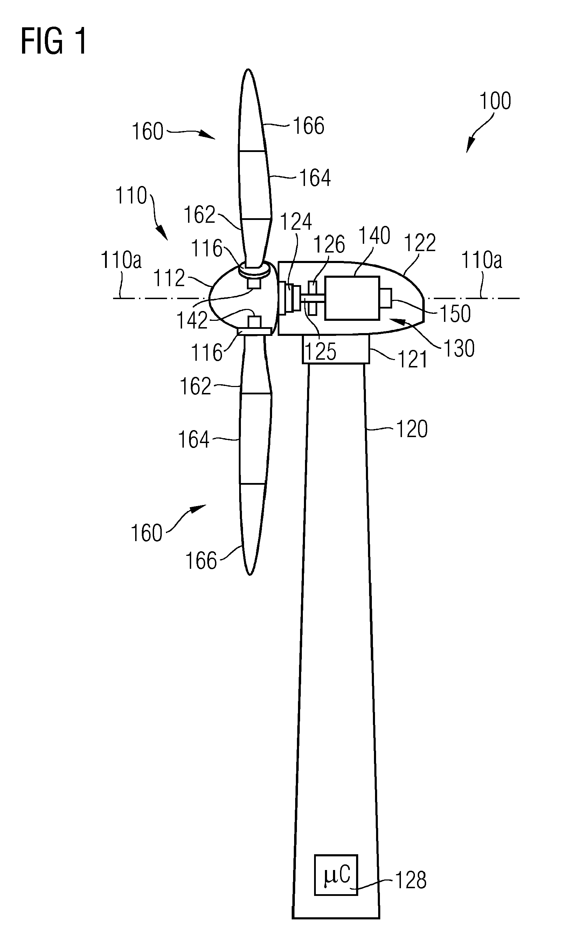

Figure 1 shows a wind turbine 100 according to an embodiment of the invention. The wind turbine 100 comprises a tower 120, which is mounted on a non-depicted foundation. On top of the tower 120 there is arranged a nacelle 122. In between the tower 120 and the nacelle 122 there is provided a yaw angle adjustment device 121, which is capable of rotating the nacelle 122 around a non-depicted vertical axis being aligned with the longitudinal extension of the tower 120. By controlling the yaw angle adjustment device 121 in an appropriate manner it can be made sure that during a normal operation of the wind turbine 100 the nacelle 122 is typically aligned with the current direction of the wind driving the wind turbine 100.

The wind turbine 100 further comprises a rotor 110 having three blades 160. In the perspective of Figure 1 only two blades 160 are visible. The rotor 110 is rotatable around a rotational axis 110a. The blades 160, which are mounted at a hub 112, extend radially with respect to the rotational axis 110a. Of course, also a rotor having a different number of blades may be used for the wind turbine.

In accordance with an embodiment of the invention described in this document each one of the blades 160 is not formed monolithically but is made out of different parts, which are mechanically connected to each other. According to the exemplary embodiment described here each blade comprises three parts, a root part 162, a center part 164, and a tip part 166.

In between the hub 112 and a blade 160 there is respectively provided a blade adjustment device 116 in order to adjust the blade pitch angle of each blade 160 by rotating the respective blade 160 around a non-depicted axis being aligned substantially parallel with the longitudinal extension of the blade 160. By controlling the blade adjustment device 116 the blade pitch angle of the respective blade 160 can be adjusted in such a manner that at least when the wind is not so strong a maximum wind power can be retrieved from the available wind driving the wind turbine 100. However, the blade pitch angle can also be intentionally adjusted to a position, in which only a reduced wind power can be captured. This might be the case if the wind driving the wind turbine 100 is so strong that there is a risk of damaging in particular the rotor 110 of the wind turbine 100.

As can be seen from Figure 1, within the nacelle 122 there is provided an optional gear box 124. The gear box 124 may be used for converting the number of revolutions of the rotor 110 into a higher number of revolutions of a shaft 125, which is coupled in a known manner to an electromechanical transducer 130. The electromechanical transducer is a generator 130.

Further, a brake 126 may be provided in order to stop the operation of the wind turbine 100 or to reduce the rotational speed of the rotor 110 for instance (a) in case of an emergency, (b) in case of too strong wind conditions, which might harm the wind turbine 100, and/or (c) in case of an intentional saving of the consumed fatigue life time and/or the fatigue life time consumption rate of at least one structural component of the wind turbine 100. However, during operation of the wind turbine instead of using the brake 126 a suitable pitch control may be used in order to adapt the rotational speed. The brake 126 may only be used for "parking" the rotor 110.

The wind turbine 100 further comprises a control system 128 for operating the wind turbine 100 in a highly efficient manner. Apart from controlling for instance the yaw angle adjustment device 121 the depicted control system 128 is also used for adjusting the blade pitch angle of the rotor blades 160 in an optimized manner. Further, the control system 128 is used in order to adjust the rotational speed of the rotor 110 in order to optimize the power output.

In accordance with basic principles of electrical engineering the generator 130 comprises a stator assembly 150 and a rotor assembly 140. According to the exemplary embodiment described here the rotor assembly 140 is arranged around or outside of the stator assembly. The rotor assembly 140 comprises a plurality of permanent magnets which are preferably made from a rare earth material. The stator assembly 150 comprises a plurality of coils for generating electrical current in response to a time alternating magnetic flux produced by the moving the plurality of permanent magnets.

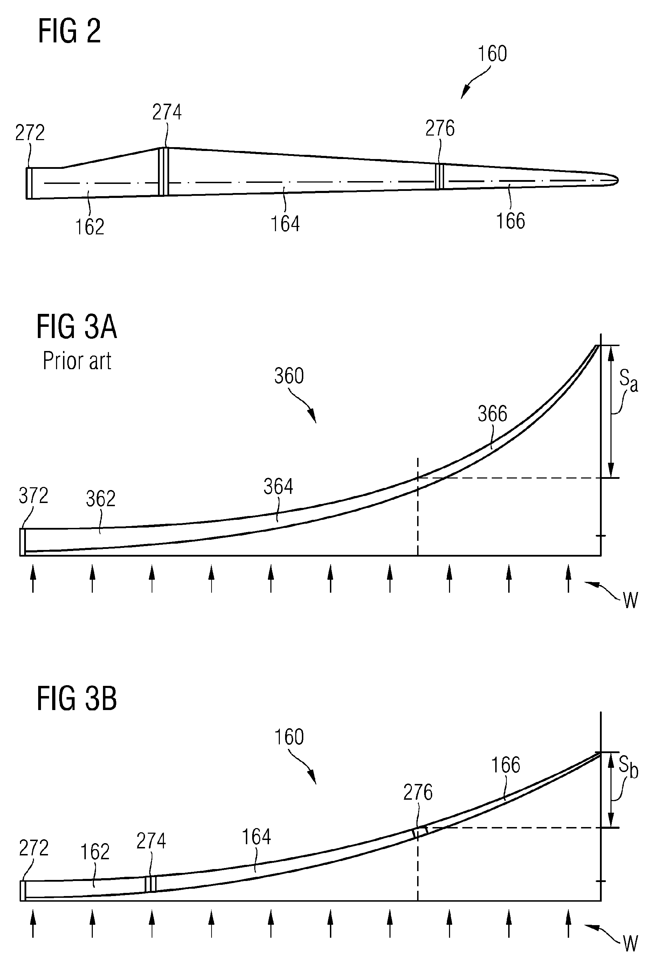

Figure 2 shows a plan view of the rotor blade 160. As has already been mentioned above the rotor blade 160 comprises the root part 162, the center part 164, and the tip part 166.

In order to mount the rotor blade 160 to a non-depicted hub of a wind turbine a fastening means 272 is provided at the left end of the root part 162. Further, a first mechanical interface 274 is used for reliably connecting the (right end of the) root part 162 with the (left end of the) center part 164. Furthermore, a second mechanical interface 276 is used for reliably connecting the (right end of the) center part 164 with the (left end of the) tip part 166.

In accordance with an embodiment of the invention described in this document the parts 162, 164 and 166 are made from different materials that are most suitable for each blade section. Specifically, according to the exemplary embodiment described here the root part 162 is made of steel or steel reinforced high strength cement (Densit) making the transmission of forces from root bolts into the center part 164 less complicated. The center part 164 comprises an airfoil shaped structure with moderate twist. This makes the introduction of robot placement of longitudinal unidirectional roving glass much simpler. The tip part 166 is constructed from carbon fiber reinforced plastic or other high modulus material, in order to drastically reduce the deflection of the blade at the tip (right) end of the tip part 166. The tip part 166 could be fabricated by using a resin injection technology or the so called "prepreg" (pre impregnated epoxy laminate method.

As has already been mentioned above, dividing the blade 160 in three different parts 162, 164 and 166 significantly reduces transportation problems in particular of a long blade e.g. having a length of more than approximately 50 m from a production site to an erection side of a wind turbine. Further, the problems which are associated with resin injection of very long parts can also be significantly reduced.

Figure 3a shows the bending behavior of a prior art rotor blade 360 of a wind turbine in response to the pressure caused by the wind W driving the wind turbine. As can be seen from Figure 3a, the rotor blade 360 is formed monolithically or from a single piece. A root section 362 continuously merges into a center section 364 and the center section 364 continuously merges into a tip section 366. Apart from connection means 372 provided at the left end of the root section 362 and being used for mechanically attaching the entire rotor blade 360 to a non-depicted hub of a wind turbine (cf. Figure 1) there are no further mechanical interfaces provided within the rotor blade 360.

As can be seen from Figure 3a, the wind W causes a deflection of the tip (right) end of the tip section 366 which is indicated with Sa.

Figure 3b shows the bending behavior of the rotor blade 160 in accordance with an embodiment of the invention. As can be seen, the (same) wind W causes a deflection of the tip (right) end of the tip part 166 which is indicated with Sb. When comparing the two Figures 3b with 3a it can be seen that due to the selection of the different materials being used for the different parts 162, 164, and 166 of the blade 160 the deflection Sb is significantly smaller than the deflection Sa due to a high stiffness in particular of a laminate being comprised in the tip part 166.

The segmented rotor blade 160 which is described in this document and which comprises different materials for different parts 162, 164 and 166 may provide in particular the following advantageous:
(A) The quality of the entire blades 160 can be substantially improved, as flow distances of injected resin are shorter and the used resin transfer method is less complicated. In other words, since the individual parts 162, 164 and 166 are significantly shorter than the entire blade 160, problems with resin infusion diminish, and fewer repairs are needed.
(B) The transportation of the blades 160 divided into at least three parts 162, 164, 166 to an erection site of a wind turbine is easier and cheaper.
(C) A mass production of rotor blades 160 having a reduced part length can be realized. This can lead to an easier production and to lower production costs.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A rotor blade for a wind turbine (100), the rotor blade (160) comprising
a root part (162) which is configured for being mounted to a hub (112) of the wind turbine (100),
a center part (164) which is mechanically connected to the root part (162), and
a tip part (166) which is mechanically connected to the center part (164), wherein
- the root part (162) comprises a first material,
- the center part (164) comprises a second material being different from the first material, and
- the tip part (166) comprises a third material being different from the first material and from the second material.

2. The rotor blade as set forth in the preceding claim, further comprising
a first interface (274) which is arranged between the root part (162) and the center part (164) and which mechanically connects the root part (162) and the center part (164) and
a second interface (276) which is arranged between the center part (164) and the tip part (166) and which mechanically connects the center part (164) and the tip part (166).

3. The rotor blade as set forth in any one of the preceding claims, further comprising
a fastening means (272), which is arranged at an end face of the root part (162) which end face is located opposite to the center part (164), wherein
the fastening means (272) is configured for connecting the root part (162) to the hub (112).

4. The rotor blade as set forth in any one of the preceding claims, wherein
the root part (162) has a length which is between 15% and 40%, preferably between 20% and 30% and more preferably between 21% and 25% of the total length of the entire rotor blade (160).

5. The rotor blade as set forth in any one of the preceding claims, wherein
the first material comprises a pre-stressed cement material.

6. The rotor blade as set forth in any one of the preceding claims, wherein
the center part (164) has a length which is between 30% and 60%, preferably between 40% and 50% and more preferably between 43% and 48% of the total length of the entire rotor blade (160).

7. The rotor blade as set forth in any one of the preceding claims, wherein
the second material comprises at least one of the following materials: glass fiber reinforced epoxy, glass fiber reinforced polyester, glass fiber reinforced polyurethane or other reinforced plastic material.

8. The rotor blade as set forth in any one of the preceding claims, wherein
the second material is a reinforced material which exhibits a modulus of elasticity of between 50 GPa and 130 GPa, preferably between 70 GPa and 110 GPa and more preferably between 74 GPa and 82 GPa.

9. The rotor blade as set forth in any one of the preceding claims, wherein
the tip part (166) has a length which is between 20% and 45%, preferably between 25% and 40% and more preferably between 29% and 33% of the total length of the entire rotor blade (160).

10. The rotor blade as set forth in any one of the preceding claims, wherein
the third material is a reinforced material which exhibits a modulus of elasticity of at least 150 GPa, preferably of at least 200 GPa and more preferably of at least 240 GPa.

11. The rotor blade as set forth in any one of the preceding claims, wherein
the center part comprises
a first center sub-part and a second center sub-part which is mechanically connected to the first center sub-part, wherein the first center part comprises a different material than the second center part.

12. A wind turbine for generating electrical power, the wind turbine (100) comprising
a tower (120),
a nacelle (122) which is arranged at a top end of the tower (120), and
a rotor (110) which is arranged at a front end of the nacelle (122) and which comprises at least one blade (160) as set forth in any one of the preceding claims.

13. A method for manufacturing a rotor blade (160), in particular a rotor blade (160) as set forth in any one of the preceding claims 1 to 11, for a rotor (110) of a wind turbine (100) the method comprising
providing a root part (162) of the rotor blade (160), which root part (162) is configured for being mounted to a hub (112) of the wind turbine (100) and which root part (162) comprises a first material,
providing a center part (164) of the rotor blade (160), wherein the center part (160) comprises a second material being different from the first material,
providing a tip part (166) of the rotor blade (160),
wherein the tip part (166) comprises a third material being different from the first material and from the second material,
connecting the tip part (166) to the center part (164), and
connecting the center part (164) to the root part (162).
